# EUROPEAN PATENT APPLICATION

(11) **EP 4 442 121 A1**
(43) Date of publication of application: **09.10.2024**
(21) Application number: 22901279.4
(22) Date of filing: 29.11.2022
(51) Int. Cl.: A23D 9/00, A23G 9/32

(54) **OIL AND FAT FOR FROZEN DESSERT MIX**

(30) Priority: 01.12.2021 JP 2021195564
(71) Applicant: Fuji Oil Holdings Inc., Izumisano-shi, Osaka 598-8540 (JP)
(72) Inventor: NAGAFUCHI, Junta, Tsukubamirai-shi, Ibaraki 300-2436 (JP)
(74) Representative: Becker, Eberhard
(86) International application number: PCT/JP2022/043893
(87) International publication number: WO 2023/100847

(57) **Abstract**

The present invention addresses the problem of providing novel oil and fat which can impart a good balance of a favorable melt-in-the-mouth sensation of frozen dessert, a refreshing feeling in the latter stage, and a rich feeling. It has been found that oil and fat, which is for a frozen dessert mix and contains a random transesterified oil having a specific fatty acid composition and a random transesterified oil containing non-lauric oil and fat as raw material oil and fat, can impart a good balance of a favorable melt-in-the-mouth sensation in frozen dessert, a refreshing feeling, and a rich feeling.

## Description

### Technical Field

The present invention relates to an oil and/or fat for a frozen dessert mix and a frozen dessert using the oil and/or fat.

### Background Art

In the production of ice creams and the like including ice cream, ice milk, and lactic ice, oils and/or fats are blended for the purpose of imparting flavor, improving texture, enhancing physical properties, and the like.

In the production of frozen desserts such as ice creams and the like, first, raw materials are mixed and dissolved, subjected to treatments such as homogenization and sterilization, and then cooled to prepare a raw material mixed liquid called a mixed liquid. This mixed liquid is usually subjected to a storage step called aging before use. Freezing of this mixed liquid is performed, and the product is subjected to a filling/packaging step and then frozen in a hardening step to obtain a frozen dessert as a final product.

When oils and/or fats are used in frozen desserts, various functions and characteristics different from those of milk fat can be utilized, and several attempts have been made so far. For example, Patent Document 1 discloses a method of using a mixed oil of from 60 to 80 mass% of coconut oil and from 40 to 20 mass% of palm oil, and Patent Document 2 discloses a method of incorporating from 95 to 40 mass% of an oil and/or fat containing 40 mass% or more of a symmetric triglyceride (SUS), and from 5 to 60 mass% of a lauric oil and/or fat. Furthermore, Patent Document 3 discloses that a frozen dessert having a low milk fat content rate, excellent meltability in the mouth, and an excellent rich taste can be obtained by using non-lauric oil and/or fat-derived SSS-type triglyceride and SUS-type triglyceride and a lauric oil and/or fat.

### Citation List

### Patent Document

Patent Document 1: JP S57-036943 A
Patent Document 2: JP H08-298934 A
Patent Document 3: JP 2007-166965 A

### Summary of Invention

### Technical Problem

With regard to a known technique in which an oil and/or fat is used in a frozen dessert, blending a lauric oil and/or fat such as coconut oil in the frozen dessert as described above can provide a refreshing feel, but tends to result in weakening of development of the original flavor of the frozen dessert. In addition, blending a symmetric triglyceride or palm oil is blended in the frozen dessert provides an improved development of a flavor such as a thick feel, but cannot provide a refreshing feel due to good flavor development. It is very difficult to obtain good meltability in the mouth, a refreshing feel, and a good flavor development in a well-balanced manner in blending of a lauric oil and/or fat and a symmetrical triglyceride or palm oil having such characteristics, and this has not been solved yet. Furthermore, under circumstances where a blending amount of an oil and/or fat in a frozen dessert is limited, it has been difficult to impart flavor to the frozen dessert and simultaneously achieve a thick feel such as richness and a milk taste and a refreshing feel when eating only by adjusting the kinds of oils and/or fats and the blending amounts thereof.

Accordingly, an object of the present invention is to provide a novel oil and/or fat capable of imparting good meltability in the mouth, and a refreshing feel in the latter half, and a thick feel to a frozen dessert.

### Solution to Problem

As a result of intensive studies to solve the above problems, the present inventor has found that an oil and/or fat for a frozen dessert mix containing a randomly interesterified oil having a specific fatty acid composition and a randomly interesterified oil using a non-lauric oil and/or fat as a raw material oil and/or fat can impart good meltability in the mouth, a refreshing feel, and a thick feel to a frozen dessert in a well-balanced manner, and thus has completed the present invention.

That is, the present invention relates to:
(1) An oil and/or fat for a frozen dessert mix, containing: a randomly interesterified oil A satisfying the following (a) to (c); and a randomly interesterified oil B obtained by using a non-lauric oil and/or fat as a raw material oil and/or fat:
   (a) containing a medium-chain fatty acid-bound oil and/or fat (MCT) as a raw material oil and/or fat for the randomly interesterified oil;
   (b) a content of a saturated fatty acid having from 6 to 10 carbon atoms being from 0.3 to 30 mass% in a constituent fatty acid composition; and
   (c) a content of a saturated fatty acid having from 12 to 14 carbon atoms being from 45 to 80 mass% in the constituent fatty acid composition,
      provided that the medium-chain fatty acid-bound oil and/or fat (MCT) is an oil and/or fat containing a fatty acid having from 6 to 10 carbon atoms as a main component in the constituent fatty acid composition;
(2) The oil and/or fat for a frozen dessert mix according to (1), wherein a mass ratio (B/A ratio) of a blending amount of the randomly interesterified oil B to a blending amount of the randomly interesterified oil A is from 0.5 to 5.0.
(3) The oil and/or fat for a frozen dessert mix according to (1), wherein the randomly interesterified oil A further satisfies the following (d):
   (d) a content of an oleic acid being 10 mass% or less in the constituent fatty acid composition;
(4) The oil and/or fat for a frozen dessert mix according to (1), wherein the randomly interesterified oil B is obtained by using a palm-based oil and/or fat as a raw material oil and/or fat;
(5) The oil and/or fat for a frozen dessert mix according to (4), wherein the randomly interesterified oil B is obtained by using palm olein as a raw material oil and/or fat;
(6) The oil and/or fat for a frozen dessert mix according to (1), further containing a palm-based oil and/or fat;
(7) The oil and/or fat for a frozen dessert mix according to (6), wherein the palm-based oil and/or fat is a palm middle-melting-point oil;
(8) The oil and/or fat for a frozen dessert mix according to (1) or (6), further containing a lauric oil and/or fat;
(9) The oil and/or fat for a frozen dessert mix according to (8), wherein the lauric oil and/or fat is coconut oil;
(10) The oil and/or fat for a frozen dessert mix according to (1) or (4), wherein a content of an unsaturated fatty acid is from 35 to 65 mass% in the constituent fatty acid composition of the oil and/or fat for a frozen dessert mix,
   the unsaturated fatty acid as used herein referring to oleic acid, linoleic acid, or linolenic acid;
(11) The oil and/or fat for a frozen dessert mix according to (7), wherein a content of an unsaturated fatty acid is from 35 to 65 mass% in the constituent fatty acid composition of the oil and/or fat for a frozen dessert mix,
   the unsaturated fatty acid as used herein referring to oleic acid, linoleic acid, or linolenic acid;
(12) The oil and/or fat for a frozen dessert mix according to (8), wherein a content of an unsaturated fatty acid is from 35 to 65 mass% in the constituent fatty acid composition of the oil and/or fat for a frozen dessert mix,
   the unsaturated fatty acid as used herein referring to oleic acid, linoleic acid, or linolenic acid;
(13) The oil and/or fat for a frozen dessert mix according to (1) or (4), wherein a content of a triglyceride, in which only saturated fatty acids are bonded, contained in the oil and/or fat for a frozen dessert mix is 5 mass% or less,
   the saturated fatty acid as used herein referring to a saturated fatty acid having 16 or more carbon atoms, three molecules of which are bonded to a triglyceride backbone;
(14) The oil and/or fat for a frozen dessert mix according to (7), wherein a content of a triglyceride, in which only saturated fatty acids are bonded, contained in the oil and/or fat for a frozen dessert mix is 5 mass% or less,
   the saturated fatty acid as used herein referring to a saturated fatty acid having 16 or more carbon atoms, three molecules of which are bonded to a triglyceride backbone;
(15) The oil and/or fat for a frozen dessert mix according to (8), wherein a content of a triglyceride, in which only saturated fatty acids are bonded, contained in the oil and/or fat for a frozen dessert mix is 5 mass% or less,
   the saturated fatty acid as used herein referring to a saturated fatty acid having 16 or more carbon atoms, three molecules of which are bonded to a triglyceride backbone;
(16) A frozen dessert using from 1 to 25 parts by mass of the oil and/or fat for a frozen dessert mix according to (1) or (6) in 100 parts by mass of the frozen dessert;
(17) The frozen dessert according to (16), wherein the oil and/or fat for a frozen dessert mix contains a lauric oil and/or fat;
(18) A method for producing a frozen dessert mix, the method including: a step of preparing an emulsion using the oil and/or fat for a frozen dessert mix according to (1) or (6); a sterilization step; a homogenization step; and a cooling step;
(19) The method for producing a frozen dessert mix according to (18), wherein the oil and/or fat for a frozen dessert mix contains a lauric oil and/or fat;
(20) A method for producing a frozen dessert, the method including freezing by using the frozen dessert mix obtained in (18);
(21) A method for producing a frozen dessert, the method including freezing by using the frozen dessert mix obtained in (19); and
(22) A method for improving flavor of a frozen dessert when eaten, the method including using the oil and/or fat for a frozen dessert mix according to (1).

In other words, the present invention relates to:
(31) An oil and/or fat for a frozen dessert mix containing: a randomly interesterified oil A satisfying the following (a) to (c); and a randomly interesterified oil B obtained by using a non-lauric oil and/or fat as a raw material oil and/or fat:
   (a) containing a medium-chain fatty acid-bound oil and/or fat (MCT) as a raw material oil and/or fat for the randomly interesterified oil;
   (b) a content of a saturated fatty acid having from 6 to 10 carbon atoms being from 0.3 to 30 mass% in a constituent fatty acid composition; and
   (c) a content of a saturated fatty acid having from 12 to 14 carbon atoms being from 45 to 80 mass% in the constituent fatty acid composition,
      provided that the medium-chain fatty acid-bound oil and/or fat (MCT) is an oil and/or fat containing a fatty acid having from 6 to 10 carbon atoms as a main component in the constituent fatty acid composition;
(32) The oil and/or fat for a frozen dessert mix according to (31), wherein a mass ratio (B/A ratio) of a blending amount of the randomly interesterified oil B to a blending amount of the randomly interesterified oil A is from 0.5 to 5.0;
(33) The oil and/or fat for a frozen dessert mix according to (31) or (32), wherein the randomly interesterified oil A further satisfies the following (d):
   (d) a content of an oleic acid being 10 mass% or less in the constituent fatty acid composition;
(34) The oil and/or fat for a frozen dessert mix according to any one of (31) to (33), wherein the randomly interesterified oil B is obtained by using a palm-based oil and/or fat as a raw material oil and/or fat;
(35) The oil and/or fat for a frozen dessert mix according to any one of (31) to (34), wherein the randomly interesterified oil B is obtained by using palm olein as a raw material oil and/or fat;
(36) The oil and/or fat for a frozen dessert mix according to any one of (31) to (35), further containing a palm-based oil and/or fat;
(37) A frozen dessert using from 1 to 25 parts by mass of the oil and/or fat for a frozen dessert mix according to any one of (31) to (36) in 100 parts by mass of the frozen dessert;
(38) A method for producing a frozen dessert mix, the method including: a step of preparing an emulsion using the oil and/or fat for a frozen dessert mix according to any one of (31) to (36); a sterilization step; a homogenization step; and a cooling step;
(39) A method for producing a frozen dessert, the method including freezing by using the frozen dessert mix obtained in (38); and
(40) A method for improving flavor of a frozen dessert when eaten, the method including using the oil and/or fat for a frozen dessert mix according to any one of (31) to (36).

### Advantageous Effects of Invention

The present invention makes it possible to obtain a frozen dessert having good meltability in the mouth, and also having a thick feel while having a refreshing feel in the latter half.

### Description of Embodiments

The present invention will be described in detail below.

### (Frozen Dessert and Frozen Dessert Mix)

The frozen dessert according to the present invention is not particularly limited as long as it is a confectionery that is in a freezing temperature range when eaten, and representative examples thereof include ice cream, ice milk, and lactic ice as defined in "Ministerial Ordinance Concerning Compositional Standards, etc. for Milk and Milk Products", so-called "Ministerial Ordinance Concerning Milk etc.", and frozen desserts defined in "Standards and Criteria for Food and Food Additives, etc." announced by the Ministry of Health and Welfare.

Ice creams and the like such as ice cream, ice milk, and lactic ice usually contain a fat source, a non-fat milk solid, sugar, an emulsifier and water, as main components.

Typical examples of the frozen dessert of the present invention are ice creams and the like, which contain milk fat, a non-fat milk solid, a sweetener, a stabilizer, an emulsifier, a flavoring, water, and the like.

Next, steps for producing a frozen dessert will be exemplified. First, raw materials are mixed, melted and dispersed to prepare an emulsion. The prepared emulsion is subjected to treatments such as homogenization and sterilization, and then cooled to prepare a raw material mixed liquid. The term "frozen dessert mix" as used herein refers to the above-mentioned raw material mixed liquid. This frozen dessert mix is usually subjected to a storage step called aging before use. For the frozen dessert, there is a method of freezing this frozen dessert mix in a factory, and distributing and selling the frozen mix as a final product of the frozen dessert, as well as a method of distributing the frozen dessert mix, and, in a shop, perform freezing of the mix and then selling the frozen mix as a final product frozen dessert.

The oil and/or fat for a frozen dessert mix of the present invention is an oil and/or fat used at the time of producing a frozen dessert, and contains a randomly interesterified oil A and a randomly interesterified oil B which have the following characteristics.

### (Randomly Interesterified Oil A)

The oil and/or fat for a frozen dessert mix according to the present invention contains a randomly interesterified oil A. The randomly interesterified oil A according to the present invention satisfies the following (a) to (c). Blending the randomly interesterified oil A in the frozen dessert mix can provide good meltability in the mouth when eating a frozen dessert, and a refreshing feel in the latter half.
(a) Containing a medium-chain fatty acid-bound oil and/or fat (MCT) as a raw material oil and/or fat for the randomly interesterified oil.
(b) A content of a saturated fatty acid having from 6 to 10 carbon atoms being from 0.3 to 30 mass% in a constituent fatty acid composition.
(c) A content of a saturated fatty acid having from 12 to 14 carbon atoms being from 45 to 80 mass% in the constituent fatty acid composition.

Note that the MCT is an oil and/or fat containing a fatty acid having from 6 to 10 carbon atoms as a main component in the constituent fatty acid composition.

The randomly interesterified oil A has, preferably, (b) a content of the saturated fatty acid having from 6 to 10 carbon atoms of from 1 to 30 mass%, and more preferably from 5 to 30 mass%, in the constituent fatty acid composition. Due to the content of the saturated fatty acid having from 6 to 10 carbon atoms satisfying this range, good meltability in the mouth when eating a frozen dessert, a good refreshing feel in the latter half, and a good thick feel are obtained.

The randomly interesterified oil A has, preferably, (c) a content of the saturated fatty acid having from 12 to 14 carbon atoms of from 50 to 80 mass%, and more preferably from 60 to 75 mass%, in the constituent fatty acid composition. Due to the content of the saturated fatty acid having from 12 to 14 carbon atoms satisfying this range, good meltability in the mouth when eating a frozen dessert, a good refreshing feel in the latter half, and a good thick feel are obtained.

The randomly interesterified oil A has, preferably, (d) a content of the oleic acid of 10 mass% or less, more preferably 8 mass% or less, and even more preferably 7 mass% or less, in the constituent fatty acid composition. Due to the content of the oleic acid satisfying this range, good meltability in the mouth when eating a frozen dessert, a good refreshing feel in the latter half, and a good thick feel are obtained.

Various oils and/or fats can be used as the raw material oils and/or fats as long as the randomly interesterified oil A satisfies the above constitution. Examples of usable oils and/or fats can include vegetable oils and/or fats such as soybean oil, rapeseed oil, corn oil, sesame oil, palm oil, coconut oil, palm kernel oil, and shea fat, and sal fat; animal oils and/or fats such as beef tallow, lard, and milk fat; algal oils; medium-chain fatty acid-bound oils and/or fats (MCTs); processed oils and/or fats obtained by fractionation, hydrogenation, interesterification or the like of these oils and/or fats; and mixed oils and/or fats of these oils and/or fats.

Preferred aspects of the raw material oil and/or fat for the randomly interesterified oil A are, for example, coconut oil, palm kernel oil, milk fat, and the like, as well as processed oils and/or fats obtained by fractionation, hydrogenation, interesterification or the like of these oils and/or fats, and further mixed oils and/or fats of these oils and/or fats, in addition to MCT contained as an essential component. More preferred aspects of the raw material oil and/or fat for the randomly interesterified oil A are coconut oil, palm kernel oil, processed oils and/or fats obtained by fractionation, hydrogenation, interesterification or the like of these oils and/or fats, and further mixed oils and/or fats of these oils and/or fats, in addition to MCT.

The random interesterification referred to herein in the present invention refers to a processing method in which fatty acids binding to oils and/or fats are randomly interesterified using a catalyst. The catalyst used in the present invention may be a chemical catalyst such as sodium methylate, a lipase having a random interesterification activity, or the like. When a lipase is used, a commercially available lipase can be used, and any type of lipase can be used as long as the lipase has a random interesterification activity.

### (Randomly Interesterified Oil B)

The oil and/or fat for a frozen dessert mix of the present invention contains a randomly interesterified oil B together with the randomly interesterified oil A. The randomly interesterified oil B is characterized in that the raw material oil and/or fat does not need to contain a lauric oil and/or fat. The randomly interesterified oil B is an oil and/or fat obtained by randomly interesterifying a non-lauric oil and/or fat as the raw material oil and/or fat. More preferably, the randomly interesterified oil B is an oil and/or fat obtained by randomly interesterifying a palm-based oil and/or fat as the raw material oil and/or fat. Specifically, the palm-based oil and/or fat is palm oil, a processed oil and/or fat obtained by fractionation, hydrogenation, interesterification or the like of palm oil, or further a mixed oil and/or fat of the oil and/or fat. Further preferably, the randomly interesterified oil B is an oil and/or fat obtained by randomly interesterifying palm olein as the raw material oil and/or fat. Further more preferably, the randomly interesterified oil B is an oil and/or fat obtained by randomly interesterifying palm super olein as the raw material oil and/or fat. Blending the randomly interesterified oil B in the frozen dessert mix can provide a thick feel when eating a frozen dessert.

Random interesterification of the randomly interesterified oil B can be carried out in the same manner as described above.

In the oil and/or fat for a frozen dessert mix of the present invention, a mass ratio (B/A ratio) of a blending amount of the randomly interesterified oil B to a blending amount of the randomly interesterified oil A is preferably from 0.5 to 5.0, more preferably from 0.6 to 4.5, and even more preferably from 0.7 to 4.5. Due to the B/A ratio satisfying this range, good meltability in the mouth when eating a frozen dessert, a good refreshing feel in the latter half, and a good thick feel are obtained.

As long as the oil and/or fat for a frozen dessert mix of the present invention contains the randomly interesterified oil A and the randomly interesterified oil B, various other oils and/or fats can be used. Examples of usable oils and/or fats can include vegetable oils and/or fats such as soybean oil, rapeseed oil, corn oil, cottonseed oil, peanut oil, sunflower oil, rice oil, safflower oil, olive oil, sesame oil, palm oil, coconut oil, palm kernel oil, shea fat, sal fat, and cacao butter; animal oils and/or fats such as beef tallow, lard, and milk fat; algal oils; processed oils and/or fats obtained by fractionation, hydrogenation, interesterification or the like of these oils and/or fats; and mixed oils and/or fats of these oils and/or fats. More preferred are palm-based oils and/or fats, and even more preferred are palm super olein and palm middle-melting-point oil.

The oil and/or fat for a frozen dessert mix of the present invention preferably further contains a lauric oil and/or fat in addition to the randomly interesterified oil A and the randomly interesterified oil B. The term, lauric oil and/or fat, referred to herein is an oil and/or fat containing lauric acid as a main constituent fatty acid. Specific examples of the lauric oil and/or fat can include palm kernel oil, coconut oil, and oils and/or fats obtained by one or more processes of fractionation, hardening, and interesterification of one or more oils and/or fats of palm kernel oil and coconut oil. More preferred is coconut oil. By satisfying this range, good meltability in the mouth when eating a frozen dessert, a good refreshing feel in the latter half, and a good thick feel are obtained.

The oil and/or fat for a frozen dessert mix of the present invention may contain the randomly interesterified oil A and the randomly interesterified oil B, but a content of an unsaturated fatty acid is preferably from 35 to 65 mass% in the constituent fatty acid composition of the oil and/or fat for a frozen dessert mix. The content is more preferably from 38 to 60 mass% and even more preferably from 40 to 55 mass%. By satisfying this range, good meltability in the mouth when eating a frozen dessert, a good refreshing feel in the latter half, and a good thick feel are obtained. The term "unsaturated fatty acid" as used herein refers to a total amount of oleic acid, linoleic acid and linolenic acid.

The oil and/or fat for a frozen dessert mix of the present invention may contain the randomly interesterified oil A and the randomly interesterified oil B, but a content of palmitic acid is preferably from 20 to 60 mass% in the constituent fatty acid composition of the oil and/or fat for a frozen dessert mix. The content is more preferably from 25 to 55 mass% and even more preferably from 30 to 50 mass%. By satisfying this range, good meltability in the mouth when eating a frozen dessert, a good refreshing feel in the latter half, and a good thick feel are obtained.

The oil and/or fat for a frozen dessert mix of the present invention may contain the randomly interesterified oil A and the randomly interesterified oil B, but a content of stearic acid is preferably 10 mass% or less in the constituent fatty acid composition of the oil and/or fat for a frozen dessert mix. The content is preferably 8 mass% or less, and more preferably from 7 mass% or less. By satisfying this range, good meltability in the mouth when eating a frozen dessert, a good refreshing feel in the latter half, and a good thick feel are obtained.

The oil and/or fat for a frozen dessert mix of the present invention may contain the randomly interesterified oil A and the randomly interesterified oil B, but an SFC at 30°C of the oil and/or fat for a frozen dessert mix is preferably 6% or less. The SFC is more preferably 5% or less, even more preferably 4% or less, and still more preferably 3% or less. By satisfying this range, good meltability in the mouth when eating a frozen dessert, a good refreshing feel in the latter half, and a good thick feel are obtained. The SFC at 30°C of the oil and/or fat for a frozen dessert mix is preferably 0.1% or more. It is more preferably 0.3% or more, even more preferably 0.5% or more, still more preferably 0.8% or more, and most preferably 1.0% or more. By satisfying this range, good meltability in the mouth when eating a frozen dessert, a good refreshing feel in the latter half, and a good thick feel are obtained. Note that the SFC (solid fat content) is obtained by measurement in accordance with IUPAC 2 150(a) Solid Content Determination in Fats by NMR.

The oil and/or fat for a frozen dessert mix of the present invention may contain the randomly interesterified oil A and the randomly interesterified oil B, but an SFC at 20°C of the oil and/or fat for a frozen dessert mix is preferably 25% or less. It is preferably 20% or less, and more preferably from 18% or less. By satisfying this range, good meltability in the mouth when eating a frozen dessert, a good refreshing feel in the latter half, and a good thick feel are obtained.

The oil and/or fat for a frozen dessert mix of the present invention may contain the randomly interesterified oil A and the randomly interesterified oil B, but a content of a triglyceride, in which only saturated fatty acids are bonded, contained in the oil and/or fat for a frozen dessert mix is 5 mass% or less. It is more preferably 4 mass% or less, even more preferably 3 mass% or less, still more preferably 2.5 mass% or less, and most preferably 2.3 mass% or less. A lower limit of the content of the triglyceride in which only saturated fatty acids are bonded is preferably 0.8 mass% or more. It is more preferably 1 mass% or more, even more preferably 1.3 mass% or more, and still further preferably 1.5 mass% or more. These upper and lower limit values can be appropriately set. By satisfying this range, good meltability in the mouth when eating a frozen dessert, a good refreshing feel in the latter half, and a good thick feel are obtained. The term "saturated fatty acid" as used herein refers to a saturated fatty acid having 16 or more carbon atoms, three molecules of which bind to a triglyceride backbone. The triglyceride can be measured by high performance liquid chromatography.

A preferred aspect of the oil and/or fat for a frozen dessert mix of the present invention further contains a palm-based oil and/or fat in addition to the randomly interesterified oil A and the randomly interesterified oil B. The most preferred aspect of the oil and/or fat for a frozen dessert mix further contains a lauric oil and/or fat, in addition to the randomly interesterified oil A, the randomly interesterified oil B, and the palm-based oil and/or fat. Due to the combination of these oils and/or fats, better meltability in the mouth when eating a frozen dessert, a better refreshing feel in the latter half, and a better thick feel are obtained.

In a preferred aspect for carrying out the present invention, the oil and/or fat for a frozen dessert mix of the present invention is used in production of the frozen dessert mix. The oil and/or fat for a frozen dessert mix of the present invention is used in a frozen dessert mix application, thereby making it possible to impart good meltability in the mouth, a refreshing feel in the latter half, and a thick feel to the frozen dessert.

As a preferred aspect of the frozen dessert using the oil and/or fat for a frozen dessert mix of the present invention, a formulation can be exemplified in which from 1 to 25 parts by mass of the oil and/or fat for a frozen dessert mix of the present invention is used in 100 parts by mass of a frozen dessert raw material. More preferably, the oil and/or fat for a frozen dessert mix is used in an amount of from 1 to 23 parts by mass.

The present invention can also be regarded as a method for improving flavor of a frozen dessert when eaten. Specifically, the method is characterized in that an oil and/or fat for a frozen dessert mix containing: a randomly interesterified oil A satisfying the following (a) to (c); and a randomly interesterified oil B obtained by using a non-lauric oil and/or fat as a raw material oil and/or fat is used in a frozen dessert. The use of such an oil and/or fat for a frozen dessert mix in a frozen dessert makes it possible to obtain a frozen dessert capable of providing good meltability in the mouth, a refreshing feel in the latter half, and a thick feel.
(a) Containing a medium-chain fatty acid-bound oil and/or fat (MCT) as a raw material oil and/or fat for the randomly interesterified oil.
(b) A content of a saturated fatty acid having from 6 to 10 carbon atoms being from 0.3 to 30 mass% in a constituent fatty acid composition.
(c) A content of a saturated fatty acid having from 12 to 14 carbon atoms being from 45 to 80 mass% in the constituent fatty acid composition.

Note that the medium-chain fatty acid-bound oil and/or fat (MCT) is an oil and/or fat containing a fatty acid having from 6 to 10 carbon atoms as a main component in the constituent fatty acid composition.

In a more preferred aspect of the method for improving flavor of a frozen dessert when eaten, the randomly interesterified oil B is an oil and/or fat obtained by randomly interesterifying the above-described non-lauric oil and/or fat as a raw material oil and/or fat. More preferred is a randomly interesterified oil of a palm-based oil and/or fat, and even more preferred is a randomly interesterified oil of palm olein.

Further, in a more preferred aspect of the method for improving flavor of a frozen dessert when eaten, a mass ratio (B/A ratio) of a blending amount of the randomly interesterified oil B to a blending amount of the randomly interesterified oil A is preferably from 0.5 to 5.0.

In addition, in the method for improving flavor of a frozen dessert when eaten, the oil and/or fat for a frozen dessert mix described as the more preferred aspect of the oil and/or fat for a frozen dessert mix can be used.

### (Examples)

The embodiments of the present invention will be described in more detail with reference to Examples below. Note that in the following description, "part(s)" and "%" mean mass basis unless otherwise specified.

### (Analysis Method)

The fatty acid compositions were analyzed according to the method of AOCS Official Method Ce 1h-05.

### (Oil and/or Fat for Frozen Dessert Mix)

o Randomly interesterified oil A-1
   Eighty (80) parts of extremely hardened palm kernel stearin oil (iodine value: 1 or less, available from Fuji Oil Co., Ltd.) and 20 parts of medium-chain fatty acid-bound oil and/or fat (iodine value: 1 or less, available from Fuji Oil Co., Ltd.) were mixed. The mixture was subjected to random interesterification at 80°C for 30 minutes using sodium methylate as a catalyst, followed by washing with water, decolorization and deodorization in ordinary manners to obtain a randomly interesterified oil A-1.
o Randomly interesterified oil A-2
   Eighty (80) parts of palm kernel stearin (iodine value: 7, available from Fuji Oil Co., Ltd.) and 20 parts of a medium-chain fatty acid-bound oil and/or fat were mixed. The mixture was subjected to interesterification, washing with water, decolorization and deodorization in the same manners as those for the randomly interesterified oil A-1 to obtain a randomly interesterified oil A-2.
o Randomly interesterified oil A-3
   Ninety five (95) parts of palm kernel oil (iodine value: 17.5, available from Fuji Oil Co., Ltd.) and 5 parts of a medium-chain fatty acid-bound oil and/or fat were mixed. The mixture was subjected to interesterification, washing with water, decolorization and deodorization in the same manners as those for the randomly interesterified oil A-1 to obtain a randomly interesterified oil A-3.

The composition of each of the three oils and/or fats is shown in Table 1.
o Randomly interesterified oil B
   Palm super olein (iodine value: 68, available from Fuji Oil Co., Ltd.) was subjected to interesterification, washing with water, decolorization and deodorization in the same manners as those for the randomly interesterified oil A-1 to obtain a randomly interesterified oil B (P2O content: 14.7 mass%).

As oils and/or fats other than those described above, the following oils and/or fats were used for examination.
Coconut oil: "Refined coconut oil" available from Fuji Oil Co., Ltd. (iodine value: 8.5)
Palm oil: "Refined palm oil" available from Fuji Oil Co., Ltd. (iodine value: 52, P2O content: 29.1 mass%)
Palm super olein: "Palm Ace 10" available from Fuji Oil Co., Ltd. (iodine value: 68, P2O content: 10.5 mass%)
Palm middle-melting-point oil: "PERMEL 26" available from Fuji Oil Co., Ltd. (iodine value: 46, P2O content 46.2 mass%)

**[Table 1]**

| | Composition | | | | | | | | |
|---|---|---|---|---|---|---|---|---|---|
| | C6 | C8 | C10 | C12 | C14 | C18:1 | Total of C6 to C10 | Total of C12 to C14 | Total unsaturated fatty acids |
| Randomly interesterified oil A-1 | 0.0 | 10.1 | 9.3 | 47.3 | 18.6 | 0.0 | 19.4 | 65.9 | 0.0 |
| Randomly interesterified oil A-2 | 0.1 | 10.2 | 9.1 | 46.6 | 18.6 | 5.3 | 19.4 | 65.2 | 6.2 |
| Randomly interesterified oil A-3 | 0.1 | 5.2 | 4.8 | 46.3 | 15.7 | 14.6 | 10.1 | 62.0 | 17 |

lactic ice was prepared using the above-mentioned oils and/or fats for a frozen dessert mix and evaluated.

### (Method for Producing Lactic Ice)

According to the blending amounts shown in Tables 2-1 and 2-2, lactic ice was prepared by following procedures.
1. Skimmed milk powder, granulated sugar, powdered starch syrup, an emulsifier and a stabilizer were mixed.
2. The mixture 1 was charged in warmed ion exchange water (product temperature: 80°C or higher).
3. While the mixture was stirred with a homomixer (7000 rpm), frozen sweetened egg yolk and each oil and/or fat were added thereto in this order.
4. The mixture was stirred for 19 minutes.
5. A vanilla flavor was charged, and the mixture was stirred for 1 minute.
6. The mixture was emulsified and homogenized with a high-pressure homogenizer (one pass of 150 kgf/cm2, LAB 1000 available from SMT Co., Ltd.).
7. Aging was performed overnight under refrigeration (5°C) to obtain a frozen dessert mix.
8. The obtained frozen dessert mix was frozen with an ice cream maker (available from AIKOH) for 15 minutes.
9. The frozen mix was dispensed into a container and shock-frozen at -40°C for 60 minutes.
10. The mix was stored in a frozen state. The obtained lactic ice was used as the frozen dessert of the present invention.

As raw materials for the lactic ice, the following materials were used.
Skimmed milk powder: "Skimmed milk powder" available from Yotsuba Milk Products Co., Ltd.
Sweetened frozen egg yolk: "Sweetened Frozen Egg Yolk 20" available from Kewpie Egg Corporation
Powdered starch syrup: "Sandex 100" available from Sanwa Starch Processing Co., Ltd.
Emulsifier: " EMULSY P-100" available from Riken Vitamin Co., Ltd.
Stabilizers: "San Best NN305" available from San-Ei Gen F.F.I., Inc.
Vanilla flavor: "OW-010" available from Ogawa & Co., Ltd.

### (Method for Analyzing Oil and/or Fat for Frozen Dessert Mix)

The fatty acid compositions of the oils and/or fats for a frozen dessert mix were analyzed according to the method of AOCS Official Method Ce 1h-05.

The SFCs at 10°C, 20°C and 30°C of the oils and/or fats for a frozen dessert mix were measured in accordance with IUPAC 2 150(a) Solid Content Determination in Fats by NMR. That is, each of the oils and/or fats was held in an environment of 80°C for 30 minutes, held in an environment of 60°C for 30 minutes to completely melt, and then held in an environment of 0°C for 60 minutes to be solidified. Thereafter, the solid fat content was measured by NMR ("minispec mq20" available from Bruker) after each of the oils and/or fats was held in each of temperature environments of 10°C, 20°C and 30°C for 30 minutes.

The content of a triglyceride, in which only saturated fatty acids are bonded, contained in the oil and/or fat for a frozen dessert mix (the saturated fatty acids as used herein referring to saturated fatty acids having 16 or more carbon atoms) was measured by high performance liquid chromatography analysis. The measurement was carried out under the conditions: column: ODS, solvent: acetone/acetonitrile = 80/20, liquid amount: 0.9 mL/min, column temperature: 25°C, and detector: differential refractometer.

### (Evaluation Method)

The lactic ice one day after the production was evaluated for three items: "Meltability in the mouth", "Refreshing feel", and "Thick feel" according to the following criteria. Sensory evaluation was conducted by 13 panelists, and the products which acquired Score 3 or higher for all the three items by the panelists' consultation were evaluated as acceptable. The results are listed in Tables 2-1 and 2-2.

o Meltability in the mouth (quickly melting in the oral cavity immediately after being eaten)
   Score 1: Melting draggingly and remaining behind.
   Score 2: Melting, but remaining behind.
   Score 3: Rapidly melting, but weaker than Score 4.
   Score 4: Rapidly melting.
   Score 5: Quickly melting and not remaining behind.
∘ Refreshing feel (not tailing in the latter half)
   Score 1: Oil and/or fat remains in the mouth and are sticky, and no refreshing feel is perceived.
   Score 2: Refreshing feel is perceived, but it takes time to obtain it.
   Score 3: Refreshing feel is perceived, but is weaker than that of Score 4.
   Score 4: Refreshing feel is perceived.
   Score 5: Refreshing feel is fairly perceived.
∘ Thick feel (flavor release (good flavor) and deep richness (taste strength) spreading immediately after eating)
   Score 1: Flavor release and richness were not perceived.
   Score 2: Flavor release and richness are perceived but are rather weak.
   Score 3: Flavor release and richness were perceived.
   Score 4: Flavor release and richness were strongly perceived.
   Score 5: Flavor release and richness are well balanced and strongly perceived.

**[Table 2-1]**

| [mass%] | | Examp le 1 | Examp le 2 | Examp le 3 | Examp le 4 | Examp le 5 | Examp le 6 | Examp le 7 | Comparati ve Example 1 | Comparati ve Example 2 | Comparati ve Example 3 |
|---|---|---|---|---|---|---|---|---|---|---|---|
| Oil and/or fat for frozen dessert mix | Randomly interesterified oil A-1 | 1.0 | - | - | 1.0 | 1.0 | 1.0 | 1.0 | 1.0 | 2.0 | 1.0 |
| | Randomly interesterified oil A-2 | - | 1.0 | - | - | - | - | - | - | - | - |
| | Randomly interesterified oil A-3 | - | - | 1.0 | - | - | - | - | - | - | - |
| | Randomly interesterified oil B | 1.8 | 1.8 | 1.8 | 0.9 | 3.5 | 4.5 | 2.0 | - | - | - |
| | Palm super olein | - | - | - | - | - | - | - | - | - | 3.5 |
| | Palm oil | - | - | - | - | - | - | 7.0 | 9.0 | 8.0 | - |
| | Palm middle-melting-point oil | 7.2 | 7.2 | 7.2 | 8.1 | 5.5 | 4.5 | - | - | - | 5.5 |
| Skimmed milk powder | | 8.0 | | | | | | | | | |
| Granulated sugar | | 10.0 | | | | | | | | | |
| Powdered starch syrup | | 5.0 | | | | | | | | | |
| Sweetened frozen egg yolk | | 2.0 | | | | | | | | | |
| Emulsifier | | 0.2 | | | | | | | | | |
| Stabilizer | | 0.2 | | | | | | | | | |
| Vanilla flavor | | 0.05 | | | | | | | | | |
| Ion exchange water | | 64.55 | | | | | | | | | |
| Fatty acid compositi on of oil and/or fat for frozen dessert mix [mass%] | C6 | 0.0 | 0.0 | 0.0 | 0.0 | 0.0 | 0.0 | 0.0 | 0.0 | 0.0 | 0.0 |
| | C8 | 1.0 | 1.0 | 0.5 | 1.0 | 1.0 | 1.0 | 1.0 | 1.0 | 2.0 | 1.0 |
| | C10 | 0.9 | 0.9 | 0.5 | 0.9 | 0.9 | 0.9 | 0.9 | 0.9 | 1.9 | 0.9 |
| | C12 | 4.9 | 4.8 | 4.8 | 4.9 | 4.9 | 5.0 | 4.9 | 4.8 | 9.5 | 4.8 |
| | C14 | 2.8 | 2.8 | 2.5 | 2.8 | 2.7 | 2.7 | 2.7 | 2.8 | 4.5 | 2.8 |
| | C16 | 42.1 | 42.1 | 42.2 | 43.3 | 38.1 | 36.1 | 37.9 | 40.9 | 37.2 | 39.0 |
| | C18 | 4.5 | 3.9 | 4.0 | 4.5 | 4.2 | 4.1 | 4.4 | 4.6 | 5.0 | 4.1 |
| | C18:1 | 36.2 | 36.7 | 37.6 | 34.5 | 36.6 | 37.4 | 36.7 | 35.5 | 31.5 | 38.4 |
| | C18:2 | 6.8 | 6.8 | 6.8 | 6.2 | 7.3 | 7.8 | 8.6 | 8.3 | 7.4 | 7.8 |
| Randomly interesterified oil B/Randomly interesterified oil A blending ratio | | 1.8 | 1.8 | 1.8 | 0.9 | 3.5 | 4.5 | 2.0 | 0 | 0 | 0 |
| SFC of oil and/or fat for frozen dessert mix [%] | 10°C | 55.5 | 57.2 | 57.8 | 60.5 | 51.1 | 48.1 | 43.1 | 49.1 | 45.7 | 42.9 |
| | 20°C | 16.6 | 19.0 | 19.6 | 19.5 | 15.2 | 15.1 | 20.3 | 22.3 | 19.1 | 5.0 |
| | 30°C | 0.3 | 1.0 | 1.4 | 0.1 | 1.6 | 2.3 | 7.1 | 7.8 | 6.6 | 0.2 |
| Content of triglyceride in which only saturated fatty acids are bonded in oil and/or fat for frozen dessert mix [%] | | 1.7 | 1.7 | 1.7 | 1.4 | 2.3 | 2.6 | 5.4 | 5.8 | 5.1 | 0.7 |
| Evaluatio n | Meltability in mouth | 4 | 4 | 4 | 5 | 3 | 3 | 4 | 2 | 2 | 2 |
| | Refreshing feel | 5 | 4 | 4 | 4 | 4 | 3 | 4 | 2 | 3 | 2 |
| | Thick feel | 4 | 4 | 3 | 4 | 3 | 4 | 4 | 4 | 4 | 4 |

| | | | | | | | | | | | |
|---|---|---|---|---|---|---|---|---|---|---|---|
| "Content of triglyceride in which only saturated fatty acids are bonded" refers to those in which three molecules of a saturated fatty acid having 16 or more carbon atoms bond to a triglyceride backbone. | | | | | | | | | | | |

**[Table 2-2]**

| [mass%] | | Example 8 | Example 9 | Example 10 | Example 11 | Example 12 | Example 13 | Example 14 |
|---|---|---|---|---|---|---|---|---|
| Oil and/or fat for frozen dessert mix | Randomly interesterified oil A-1 | 1.0 | 2.0 | 2.0 | 2.0 | 2.0 | 2.0 | 2.0 |
| | Randomly interesterified oil A-2 | - | - | - | - | - | - | - |
| | Randomly interesterified oil A-3 | | - | - | - | - | - | - |
| | Randomly interesterified oil B | 2.0 | 2.9 | 2.7 | 2.5 | 2.3 | 2.0 | 1.5 |
| | Palm super olein | - | - | - | - | - | - | - |
| | Palm oil | - | - | - | - | - | - | - |
| | Palm middle-melting-point oil | 7.0 | 5.0 | 5.0 | 5.0 | 5.0 | 5.0 | 5.0 |
| | Coconut oil | - | 0.1 | 0.3 | 0.5 | 0.7 | 1.0 | 1.5 |
| Skimmed milk powder | | 8.0 | | | | | | |
| Granulated sugar | | 10.0 | | | | | | |
| Powdered starch syrup | | 5.0 | | | | | | |
| Sweetened frozen egg yolk | | 2.0 | | | | | | |
| Emulsifier | | 0.2 | | | | | | |
| Stabilizer | | 0.2 | | | | | | |
| Vanilla flavor | | 0.05 | | | | | | |
| Ion exchange water | | 64.55 | | | | | | |
| Fatty acid composition of oil and/or fat for frozen dessert mix [mass%] | C6 | 0.0 | 0.0 | 0.0 | 0.0 | 0.0 | 0.0 | 0.1 |
| | C8 | 1.0 | 2.1 | 2.3 | 2.4 | 2.6 | 2.8 | 3.2 |
| | C10 | 0.9 | 1.9 | 2.0 | 2.2 | 2.3 | 2.5 | 2.8 |
| | C12 | 4.9 | 10.1 | 11.1 | 12.1 | 13.1 | 14.5 | 16.9 |
| | C14 | 2.8 | 4.7 | 5.0 | 5.3 | 5.7 | 6.2 | 7.0 |
| | C16 | 41.7 | 35.6 | 35.1 | 34.6 | 34.1 | 33.4 | 32.2 |
| | C18 | 4.4 | 4.7 | 4.7 | 4.7 | 4.6 | 4.6 | 4.6 |
| | C18:1 | 36.6 | 33.6 | 32.7 | 31.8 | 30.9 | 29.6 | 27.4 |
| | C18:2 | 6.9 | 6.7 | 6.5 | 6.3 | 6.1 | 5.8 | 5.2 |
| Randomly interesterified oil B/Randomly interesterified oil A blending ratio | | 2.0 | 1.5 | 1.4 | 1.3 | 1.2 | 1.0 | 0.8 |
| SFC of oil and/or fat for frozen dessert mix [%] | 10°C | 57.1 | 48.9 | 48.6 | 49.2 | 50.4 | 53.0 | 54.5 |
| | 20°C | 18.7 | 12.1 | 10.6 | 10.3 | 9.4 | 9.6 | 7.6 |
| | 30°C | 1.2 | 1.4 | 1.2 | 1.1 | 1.1 | 0.7 | 0.5 |
| Content of triglyceride in which only saturated fatty acids are bonded in oil and/or fat for frozen dessert mix [%] | | 1.8 | 1.9 | 1.8 | 1.8 | 1.7 | 1.5 | 1.3 |
| Evaluation | Meltability in mouth | 4 | 4 | 4 | 4 | 5 | 5 | 5 |
| | Refreshing feel | 5 | 5 | 5 | 5 | 5 | 5 | 5 |
| | Thick feel | 4 | 4 | 4 | 4 | 4 | 4 | 4 |

Blending the randomly interesterified oil A and the randomly interesterified oil B of Examples 1 to 3 also imparted good meltability in the mouth, a refreshing feel in the latter half, and flavor release and deep richness. In particular, the combination of the randomly interesterified oil A-1 and the randomly interesterified oil B was best. Even when the blending amount of the randomly interesterified oil B was changed, all the obtained meltability in the mouth, refreshing feel and thick feel were good. In addition, when a palm-based oil and/or fat was blended in the randomly interesterified oil A and the randomly interesterified oil B of Example 7, good meltability in the mouth was obtained, and a refreshing feel in the latter half and a thick feel were perceived. On the other hand, in Comparative Examples 1 to 3 in which the randomly interesterified oil B was not blended, the thick feel was obtained, but the meltability in the mouth and refreshing feel were weak and poorly balanced.

Furthermore, also in Examples 8 to 14, good meltability in the mouth was obtained, and a refreshing feel in the latter half and a thick feel were also imparted. The formulations having the best flavor and good flavor balance were those containing the palm middle-melting-point oil and coconut oil in addition to the two randomly interesterified oils (Examples 12 to 14). In addition, when the content of the triglyceride in which only saturated fatty acids are bonded in the oil and/or fat for a frozen dessert mix was 0.8 mass% or more and 5 mass% or less, good meltability in the mouth was obtained, and a refreshing feel in the latter half and a thick feel were perceived.

## Claims

1. An oil and/or fat for a frozen dessert mix comprising: a randomly interesterified oil A satisfying the following (a) to (c); and a randomly interesterified oil B obtained by using a non-lauric oil and/or fat as a raw material oil and/or fat:
(a) containing a medium-chain fatty acid-bound oil and/or fat (MCT) as a raw material oil and/or fat for the randomly interesterified oil;
(b) a content of a saturated fatty acid having from 6 to 10 carbon atoms being from 0.3 to 30 mass% in a constituent fatty acid composition; and
(c) a content of a saturated fatty acid having from 12 to 14 carbon atoms being from 45 to 80 mass% in the constituent fatty acid composition, provided that the medium-chain fatty acid-bound oil and/or fat (MCT) is an oil and/or fat containing a fatty acid having from 6 to 10 carbon atoms as a main component in the constituent fatty acid composition.

2. The oil and/or fat for a frozen dessert mix according to claim 1, wherein a mass ratio (B/A ratio) of a blending amount of the randomly interesterified oil B to a blending amount of the randomly interesterified oil A is from 0.5 to 5.0.

3. The oil and/or fat for a frozen dessert mix according to claim 1, wherein the randomly interesterified oil A further satisfies the following (d):
(d) a content of an oleic acid is 10 mass% or less in the constituent fatty acid composition.

4. The oil and/or fat for a frozen dessert mix according to claim 1, wherein the randomly interesterified oil B is obtained by using a palm-based oil and/or fat as a raw material oil and/or fat.

5. The oil and/or fat for a frozen dessert mix according to claim 4, wherein the randomly interesterified oil B is obtained by using palm olein as a raw material oil and/or fat.

6. The oil and/or fat for a frozen dessert mix according to claim 1, further comprising a palm-based oil and/or fat.

7. The oil and/or fat for a frozen dessert mix according to claim 6, wherein the palm-based oil and/or fat is a palm middle-melting-point oil.

8. The oil and/or fat for a frozen dessert mix according to claim 1 or 6, further comprising a lauric oil and/or fat.

9. The oil and/or fat for a frozen dessert mix according to claim 8, wherein the lauric oil and/or fat is coconut oil.

10. The oil and/or fat for a frozen dessert mix according to claim 1 or 4, wherein a content of an unsaturated fatty acid is from 35 to 65 mass% in the constituent fatty acid composition of the oil and/or fat for a frozen dessert mix,
the unsaturated fatty acid as used herein referring to oleic acid, linoleic acid, or linolenic acid.

11. The oil and/or fat for a frozen dessert mix according to claim 7, wherein a content of an unsaturated fatty acid is from 35 to 65 mass% in the constituent fatty acid composition of the oil and/or fat for a frozen dessert mix,
the unsaturated fatty acid as used herein referring to oleic acid, linoleic acid, or linolenic acid.

12. The oil and/or fat for a frozen dessert mix according to claim 8, wherein a content of an unsaturated fatty acid is from 35 to 65 mass% in the constituent fatty acid composition of the oil and/or fat for a frozen dessert mix,
the unsaturated fatty acid as used herein referring to oleic acid, linoleic acid, or linolenic acid.

13. The oil and/or fat for a frozen dessert mix according to claim 1 or 4, wherein a content of a triglyceride, in which only saturated fatty acids are bonded, contained in the oil and/or fat for a frozen dessert mix is 5 mass% or less,
the saturated fatty acid as used herein referring to a saturated fatty acid having 16 or more carbon atoms, three molecules of which are bonded to a triglyceride backbone.

14. The oil and/or fat for a frozen dessert mix according to claim 7, wherein a content of a triglyceride, in which only saturated fatty acids are bonded, contained in the oil and/or fat for a frozen dessert mix is 5 mass% or less,
the saturated fatty acid as used herein referring to a saturated fatty acid having 16 or more carbon atoms, three molecules of which are bonded to a triglyceride backbone.

15. The oil and/or fat for a frozen dessert mix according to claim 8, wherein a content of a triglyceride, in which only saturated fatty acids are bonded, contained in the oil and/or fat for a frozen dessert mix is 5 mass% or less,
the saturated fatty acid as used herein referring to a saturated fatty acid having 16 or more carbon atoms, three molecules of which are bonded to a triglyceride backbone.

16. A frozen dessert using from 1 to 25 parts by mass of the oil and/or fat for a frozen dessert mix according to claim 1 or 6 in 100 parts by mass of the frozen dessert.

17. The frozen dessert according to claim 16, wherein the oil and/or fat for a frozen dessert mix contains a lauric oil and/or fat.

18. A method for producing a frozen dessert mix, the method comprising: a step of preparing an emulsion using the oil and/or fat for a frozen dessert mix according to claim 1 or 6; a sterilization step; a homogenization step; and a cooling step.

19. The method for producing a frozen dessert mix according to claim 18, wherein the oil and/or fat for a frozen dessert mix contains a lauric oil and/or fat.

20. A method for producing a frozen dessert, the method comprising freezing by using the frozen dessert mix obtained in claim 18.

21. A method for producing a frozen dessert, the method comprising freezing by using the frozen dessert mix obtained in claim 19.

22. A method for improving flavor of a frozen dessert when eaten, the method comprising using the oil and/or fat for a frozen dessert mix according to claim 1.
